# EUROPEAN PATENT SPECIFICATION

(11) **EP 0 953 597 B1**
(45) Date of publication and mention of the grant of the patent: **17.09.2003**
(21) Application number: 99108021.9
(22) Date of filing: 23.04.1999
(51) Int. Cl.: C08K 5/37, C08L 51/06, C08K 5/13

(54) **Improving heat aging of grafted polyolefins using zinc mercapto compounds**
Verbesserung der Wärmebeständigkeit gepfropfter Polyolefine mit Zink-Merkaptoverbindungen
Amélioration de la résistance des polyoléfines greffés en utilisant des composés de zinc-mercapto

(30) Priority: 29.04.1998 US 69622
(43) Date of publication of application: 03.11.1999
(73) Proprietor: Basell Poliolefine Italia S.p.A., 20124 Milano (IT)
(72) Inventor: Schneckenburger, Daniel E., Elkton, Maryland 21922 (US); Berta, Dominic A., Newark, Delaware 19713 (US)
(74) Representative: Gaverini, Gaetano

(56) References cited:
- EP-A- 0 494 655
- EP-A- 0 561 631
- FR-A- 2 075 963
- US-A- 4 260 661
- US-A- 5 158 997

## Description

### Field of the Invention

This invention relates to the heat stabilization of graft copolymers of propylene polymers.

### Background of the Invention

Polyolefins are typically used in products where long term performance is desired or required and where these products are subjected to elevated temperatures that accelerate the rate of oxidative degradation in the polyolefin composition, commonly referred to as "heat aging". Thus it is essential that polyolefins retain their original properties, such as elongation and tensile strength, at elevated temperatures during the desired term of performance.

It is known that zinc salts of mercapto compounds such as 2-mercaptobenzothiazole, 2-mercaptotoluimidazole, and 2-mercaptobenzimidazole, are useful for improving the heat aging of resins like polyphenylene oxide as disclosed in FR 2075963 or of thermoplastic elastomers as disclosed in U.S. Patent 5,196,462. The zinc mercapto compounds can also be used in combination with sterically hindered phenol compounds in homopolymers and copolymers of ethylene as disclosed in U.S. Patent 4,260,661 or in polyolefin thermoplastic elastomers as disclosed in U.S. Patent 5,158,997.

Zinc salts of mercapto compounds have also been used in flame- and smoke-retardant compositions for various polymers. For example, zinc salts of 2-mercaptobenzothiazole, benzoxazole, and benzimidazole have been used in polystyrene as a smoke retardant on burning as disclosed in U.S. 4,011,194. U.S. 4,857,673 discloses the use of a combination of a hindered phenol and a zinc salt of mercaptobenzimidazole or mercaptotolylimidazole in a flame retardant insulating composition that also contains an antimony compound, a lead compound, a peroxide curing agent and an ethylene homopolymer or copolymer, or blends of these ethylene polymers with other polymers.

Heat aging is also a problem with graft copolymers of polypropylene. However, the mechanism for the degradation of polystyrene and other polymerized monomers that are grafted onto the polypropylene backbone is somewhat different than that of polyolefins, and the grafted polymers would be expected to degrade independently of the polyolefin backbone, e.g., the thermooxidative stability of unmodified polystyrene is relatively high, while polypropylene is very sensitive to oxidation and cannot be used without adequate stabilization. Thus there is still a need for additives that will improve heat aging of propylene polymer materials, to which various monomers have been graft polymerized.

### Summary of the Invention

The composition of this invention comprises:
(1) a graft copolymer comprising a backbone of a propylene polymer having graft polymerized thereto polymerized monomers selected from the group consisting of
   (a) vinyl-substituted aromatic compounds,
   (b) unsaturated aliphatic acids or esters thereof,
   (c) anhydrides of unsaturated aliphatic dicarboxylic acids, and
   (d) mixtures thereof;
(2) 0.05% to 0.5% by weight of a sterically hindered phenol compound, based on the total weight of the composition; and
(3) 0.5% to 5.0% by weight of zinc 2-mercaptobenzothiazole, zinc 2-mercaptotoluimidazole or zinc 2-mercaptobenzimidazole, based on the total weight of the composition.

Compositions containing a mineral filler or glass fibers have also been prepared. Graft copolymers containing a combination of a hindered phenol and a zinc salt of a mercapto compound exhibit improved heat aging properties compared to compositions without the zinc salt.

### Detailed Description of the Invention

The propylene polymer that is used as the backbone of the graft copolymer of this invention can be
(a) a crystalline homopolymer of propylene having an isotactic index greater than 80, preferably 85 to 99;
(b) a crystalline copolymer of propylene and an olefin selected from the group consisting of ethylene and C₄-C₁₀ α-olefins, provided that when the olefin is ethylene, the maximum polymerized ethylene content is 10% by weight, preferably 4%, and when the olefin is a C₄-C₁₀ α-olefin, the maximum polymerized content thereof is 20% by weight, preferably 16%, the copolymer having an isotactic index greater than 85;
(c) a crystalline terpolymer of propylene and two olefins selected from the group consisting of ethylene and C₄-C₈ α-olefins, provided that the maximum polymerized C₄-C₈ α-olefin content is 20% by weight, preferably 16%, and, when ethylene is one of the olefins, the maximum polymerized ethylene content is 5% by weight, preferably 4%, the terpolymer having an isotactic index greater than 85;
(d) an olefin polymer composition comprising:
   (i) 10% to 50% by weight, preferably 10% to 40%, and most preferably 20% to 35%, of a propylene homopolymer having an isotactic index of 80% to 99%, and preferably 85% to 99%, or a copolymer selected from the group consisting of (a) a copolymer of propylene and ethylene, (b) propylene, ethylene and a CH₂=CHR α-olefin, where R is a C₂-C₈ straight or branched alkyl group, and (c) propylene and an α-olefin as defined above in (i)(b), wherein the copolymer contains 85% to 99%, and preferably 90% to 99% propylene and has an isotactic index greater than 80% to 98%, preferably greater than 85% to 98%,
   (ii) 3% to 20%, preferably 7% to 15%, of a semi-crystalline, essentially linear copolymer having a crystallinity of 20% to 60% by differential scanning calorimetry (DSC), wherein the copolymer is selected from the group consisting of (a) ethylene and propylene containing over 50% ethylene; (b) ethylene, propylene, and an α-olefin as defined above in (i)(b), containing 1% to 10% of the α-olefin and over 50% up to 98%, preferably 80% to 95%, of both ethylene and α-olefin; and (c) ethylene and an α-olefin as defined in (i)(b), containing over 50% up to 98%, preferably 80% to 95%, of the α-olefin, which copolymer is insoluble in xylene at 25°C, and
   (iii) 40% to 80%, preferably 50% to 70%, of a copolymer selected from the group consisting of a copolymer of (a) ethylene and propylene wherein the copolymer contains from 20% to less than 40%, preferably from 20% to 38%, most preferably 25% to 38% ethylene, (b) ethylene, propylene, and an α-olefin as defined in (i)(b), wherein the α-olefin is present in an amount of 1% to 10%, preferably 1% to 5%, and the amount of ethylene and α-olefin present is from 20% to less than 40%, and (c) ethylene and an α-olefin as defined in (i)(b), containing from 20% to less than 40%, preferably from 20% to 38%, and most preferably 25% to 38% of the α-olefin, and optionally containing 0.5% to 10%, preferably 1% to 5% of a diene, the copolymer (iii) being soluble in xylene at 25°C, and having an intrinsic viscosity of 1.5 to 4.0 dl/g, preferably 1.7 to 3.0 dl/g, wherein the total amount of ethylene units or the α-olefin units in the olefin polymer composition or of ethylene and the α-olefin units when both are present in the olefin polymer composition is 15% to 35%,
   wherein the total amount of (ii) and (iii), based on the total olefin polymer composition is 65% to 80%; the weight ratio of (ii)/(iii) is less than 0.4, preferably 0.1 to 0.3; the total content of ethylene or C₄-C₈ α-olefin or combination thereof in (ii) + (iii) is less than 50%, and preferably 20% to 45%, and the composition is prepared by polymerization in at least two stages and has a flexural modulus of less than 150 MPa; or
(e) a thermoplastic olefin comprising:
   (i) 10% to 60%, preferably 20% to 50%, of a crystalline propylene homopolymer having an isotactic index greater than 80, or a crystalline copolymer selected from the group consisting of (a) a copolymer of ethylene and propylene, (b) a terpolymer of ethylene, propylene, and a C₄-C₈ α-olefin, and (c) a copolymer of ethylene and a C₄-C₈ α-olefin, the copolymer having a propylene content greater than 85% and an isotactic index of greater than 85;
   (ii) 20% to 60%, preferably 30% to 50%, of an amorphous copolymer selected from the group consisting of (a) a copolymer of ethylene and propylene, (b) a terpolymer of ethylene, propylene, and a C₄-C₈ α-olefin, and (c) a copolymer of ethylene and a C₄-C₈ α-olefin, the copolymer optionally containing 0.5% to 10% of a diene and containing less than 70% ethylene and being soluble in xylene at 25°C; and
   (iii) 3% to 40%, preferably 10% to 20%, of a copolymer of ethylene and propylene or a C₄-C₈ α-olefin that is insoluble in xylene at 25°C,
wherein the composition has a flexural modulus of greater than 150 but less than 1200 MPa, preferably 200 to 1100 MPa, most preferably 200 to 1000 MPa. C₄₋₈ α-olefins useful in the preparation of (d) and (e) include, for example, butene-1 ; pentene-1;hexene-1; 4-methyl-1-pentene, and octene-1.

The diene, when present, is typically a butadiene; 1,4-hexadiene; 1,5-hexadiene, or ethylidenenorbomene.

The preparation of the propylene polymer composition (d) is described in more detail in U.S. Patents 5,212,246 and 5,409,992. The preparation of the propylene polymer composition (e) is described in more detail in U.S. Patents 5,302,454 and 5,409,992.

Propylene homopolymer is the preferred propylene polymer backbone material.

The monomers that form grafted polymers or copolymers on the backbone of propylene polymer material are selected from the group consisting of (a) vinyl-substituted aromatic compounds, such as, for example, styrene, α- and *p*-methylstyrene, and *p*-t-butylstyrene, (b) unsaturated aliphatic carboxylic acids and esters thereof, such as, for example, acrylic acid; methacrylic acid; acrylate esters such as methyl, ethyl, hydroxyethyl, 2-ethylhexyl, and butyl acrylate esters; and methacrylate esters such as the methyl, ethyl, butyl, benzyl, phenylethyl, phenoxyethyl, epoxypropyl, and hydroxypropyl methacrylate esters, (c) anhydrides of aliphatic unsaturated dicarboxylic acids, such as, for example, maleic anhydride, and (d) mixtures thereof. Preferred monomers include styrene, methyl methacrylate-co-methyl acrylate, and styrene-co-α-methylstyrene-co-maleic anhydride.

The monomers are added in an amount of 5 to 240 parts per hundred parts of the propylene polymer material, preferably 20 parts to 100 pph.

During the graft polymerization, the monomers also polymerize to form a certain amount of free or ungrafted polymer or copolymer. The morphology of the graft copolymer is such that the propylene polymer material is the continuous or matrix phase, and the polystyrene or other polymerized monomers, both grafted and ungrafted, are a dispersed phase.

The graft copolymer can be made according to any one of various methods. One of these methods involves forming active grafting sites on the propylene polymer material either in the presence of the grafting monomers, or followed by treatment with the monomers. The grafting sites can be produced by treatment with a peroxide or other chemical compound that is a free radical polymerization initiator, or by irradiation with high energy ionizing radiation. The free radicals produced in the polymer as a result of the chemical or irradiation treatment form the active grafting sites on the polymer and initiate the polymerization of the monomers at these sites. Graft copolymers produced by peroxide-initiated grafting methods are preferred.

Preparation of graft copolymers by contacting the propylene polymer with a free radical polymerization initiator such as an organic peroxide and a vinyl monomer is described in more detail in U.S. Patent 5,140,074. Preparation of graft copolymers by irradiating an olefin polymer and then treating with a vinyl monomer is described in more detail in U.S. Patent 5,411,994.

Heat aging of the graft copolymers of this invention is improved by using a combination of 0.5% to 5.0%, preferably 12% to 1.6%, based on the total weight of the composition, of zinc 2-mercaptobenzimidazole, zinc 2-mercaptotoluimidazole or zinc 2-mercaptobenzothiazole, and 0.05% to 0.5%, preferably 0.15% to 0.20%, based on the total weight of the composition, of a sterically hindered phenol compound.

Sterically hindered phenol compounds suitable for use in the present invention include, for example, 2,6-di-t-butyl-p-cresol; octadecyl-3-(3,5-di-t-butyl-4-hydroxyphenyl) propionate; N,N'-hexamethylene-bis-(3,5-di-t-butyl-4-hydroxy-hydrocinnamate); hexamethylene bis(3,5-di-t-butyl-4-hydroxyhydrocinnamate), and tetrakis[methylene(3',5'-di-t-butyl-4-hydroxy-hydrocinnamate]methane.

Optionally, the composition can also contain 2% to 30%, preferably 5% to 15%, based on the total weight of the composition, of one or more rubber components, and 5% to 90%, preferably 10% to 70%, based on the total weight of the composition, of a broad molecular weight distribution propylene polymer.

The rubber component is selected from one or more of the group consisting of (i) an olefin copolymer rubber, (ii) a monoalkenyl aromatic hydrocarbon-conjugated diene block copolymer, and (iii) a core-shell rubber. Any of these rubber components can have acid or anhydride functionality or can be free of these functional groups. The preferred rubber components are (i) or (ii), either alone or in combination.

Suitable olefin copolymer rubbers include, for example, saturated olefin copolymer rubbers such as ethylene/propylene monomer rubbers (EPM), ethylene(octene-1, and ethylene/butene-1 rubbers, and unsaturated olefin copolymer rubbers such as ethylene/propylene/diene monomer rubbers (EPDM). The preferred olefin copolymer rubbers are ethylene/propylene, ethylene/butene-1, and ethylene/octene-1 copolymers.

The monoalkenyl aromatic hydrocarbon-conjugated diene block copolymer can be a thermoplastic elastomer of the A-B (or diblock) structure, the linear A-B-A ( or triblock) structure, the radial (A-B)ₙ type where n = 3-20%, or a combination of these structure types, wherein each A block is a monoalkenyl aromatic hydrocarbon polymer block, and each B block is an unsaturated rubber block. Various grades of copolymers of this type are commercially available. The grades differ in structure, molecular weight of the mid and end blocks, and ratio of monoalkenyl aromatic hydrocarbon to rubber. The block copolymer can also be hydrogenated. Typical monoalkenyl aromatic hydrocarbon monomers are styrene, ring-substituted C₁-C₄ linear or branched alkyl styrenes, and vinyltoluene. Styrene is preferred. Suitable conjugated dienes include, for example, butadiene and isoprene. Preferred block copolymers are hydrogenated styrene/ethylene-butene-1/styrene triblock copolymers.

The weight average molecular weight M_{w} of the block copolymers generally will be in the range of 45,000 to 260,000 g/mole, average molecular weights in the range of 50,000 to 125,000 g/mole being preferred on the basis that they produce compositions having the best balance of impact strength and stiffness. Also, while block copolymers having unsaturated as well as saturated rubber blocks can be used, copolyrners having saturated rubber blocks are preferred, also on the basis of the impact/stiffness balance of the compositions containing them. The weight ratio of monoalkenyl aromatic hydrocarbon to conjugated diene rubber in the block copolymer is in the range of 5/95 to 50/50, preferably 10/90 to 40/60.

The core-shell rubber components comprise small particles of a crosslinked rubber phase surrounded by a compatibilizing shell, normally a glassy polymer or copolymer. The core is typically a diene rubber such as butadiene or isoprene rubber, or a polyacrylate. The shell is typically a polymer of two or more monomers selected from styrene, methyl methacrylate, and acrylonitrile. Particularly preferred core-shell rubbers have a polyacrylate core.

Suitable impact modifiers include, for example, Engage^{TM} 8150 ethylene/octene-1 copolymer, commercially available from DuPont-Dow Elastomers; EPM 306P ethylene/propylene copolymer, commercially available from the Polysar Rubber Division of Miles, Incorporated; and Kraton^{TM} RP6912 styrene(ethylene-propylene/styrene triblock copolymer rubber and Kraton^{TM} FG1901X styrene/ethylene-butene-1/styrene triblock copolymer rubber modified with maleic anhydride, commercially available from Shell Chemical Company.

Another optional ingredient is a broad molecular weight distribution propylene polymer (BMWD PP) having a M_{w}/Mₙ of 5 to 60, preferably 5 to 40; a melt flow rate of 0.5 to 50, preferably 1 to 30 g/10 min, and xylene insolubles at 25°C of greater than or equal to 94%, preferably greater than or equal to 96%, and most preferably greater than or equal to 98%. The propylene polymer having a broad molecular weight distribution can be a homopolymer of propylene or an ethylene/propylene rubber impact-modified homopolymer of propylene, wherein the propylene homopolymer has a broad molecular weight distribution.

The BMWD PP can be prepared by sequential polymerization in at least two stages, in the presence of a Ziegler-Natta catalyst supported on magnesium halide in active form. The polymerization process occurs in separate and consecutive stages, and in each stage polymerization takes place in the presence of the polymer and the catalyst from the preceding stage.

The polymerization process can be carried out in a batch or in a continuous mode according to known techniques, operating in liquid phase in the presence or not of an inert diluent, or in gas phase, or liquid-gas phase, preferably in gas phase. The preparation of the BMWD PP is described in more detail in U.S. Patent 5,286,791.

The composition of this invention can also contain an inorganic filler such as CaCO₃ or talc. The filler is present in an amount of 20% to 35%, preferably 30% to 35%.

Glass fibers can also be added as a reinforcing agent When present, they are used in an amount of 20% to 50%, preferably 30% to 40%, based on the total weight of the composition. A compatibilizing agent such as maleic anhydride-modified polypropylene is generally used with glass fibers. Polypropylenes modified with various amount of maleic anhydride are available commercially, for example, from Eastman Chemical Company and Aristech Chemicals. The compatibilizing agent is used in an amount of 1% to 3%, based on the total weight of the composition.

Other additives such as pigments, slip agents, waxes, oils, antiblocking agents, and antioxidants can also be present in the composition.

The test methods used to evaluate the molded specimens were:

| | |
|---|---|
| Tensile strength | ASTM D-638-89 |
| Elongation at yield | ASTM D-638-89 |
| Elongation at break | ASTM D-638-89 |
| Shore D hardness | ASTM D-2240 |
| Melt flow rate, 230°C, 3.8 kg | ASTMD-1238 |

The polydispersity index (P.I) is defined as the inverse of the cross-over modulus obtained from a frequency scan as described in G. R Zeichner and P. D. Patel, "A Comprehensive Evaluation of Polypropylene Melt Rheology", Proc. 2^{nd} World Cong. on Chem. Eng., Vol. 6, p. 333, Montreal, 1981.

Isotactic index is defined as the xylene insoluble fraction. The weight percent of olefin polymer soluble in xylene at 25°C is determined by dissolving 2.5 g of the polymer in 250 ml of xylene in a vessel equipped with a stirrer that is heated at 135°C with agitation for 20 minutes. The solution is cooled to 25°C while continuing the agitation, and then left to stand without agitation for 30 minutes so that the solids can settle. The solids are filtered with filter paper, the remaining solution is evaporated by treating it with a nitrogen stream, and the solid residue is vacuum dried at 80°C until a constant weight is reached. The percent by weight of polymer insoluble in xylene at 25°C is the isotactic index of the polymer. The value obtained in this manner corresponds substantially to the isotactic index determined via extraction with boiling n-heptane, which by definition constitutes the isotactic index of the polymer.

Intrinsic viscosity is measured in tetrahydronaphthalene at 135°C.

The crystallinity of an ethylene copolymer is measured from the heat of fusion of the copolymer, which is determined by differential scanning calorimetry on a 5 to 10 mg sample of the copolymer heated at 20°C/min and assuming the heat of fusion of 100% crystalline polyethylene at 400°K is 293 J/g as described in U. Gaur and B. Wunderlich, J. Phys. Chem. Ref. Data, 10 (1), 119 (1981). The percent crystallinity is calculated by dividing the heat of fusion of the copolymer by the heat of fusion of 100% crystalline polyethylene and multiplying by 100.

Molecular weight measurements were made by gel permeation chromatography.

All heat aging tests were done at 160°C. It should be noted that this is a very severe test for polyolefins and that this temperature is higher than the temperature normally used. In the tables, samples that lost their integrity and could not be tested were marked "FAIL". Typically samples that exhibited less than 50% loss in tensile strength and/or minimal weight loss showed improved heat aging compared with controls that did not contain a combination of a zinc salt of 2-mercaptobenzothiazole or 2-mercaptobenzimidazole and a hindered phenol compound.

In this specification, all parts and percentages are by weight unless otherwise noted.

### Example 1

This example demonstrates the effect on heat aging when a combination of a zinc salt of a mercapto compound and a hindered phenol is incorporated into a graft copolymer comprising a propylene homopolymer backbone, onto which styrene was graft polymerized (PP-g-S).

The propylene homopolymer used as the backbone polymer had an average MFR of 20 g/10 min and a poured bulk density of 0.340-0.345 g/cm³, and is commercially available from Montell USA Inc.

The monomers were grafted onto the polypropylene backbone at a grafting temperature of 120°C using the previously described peroxide-initiated graft polymerization process. Forty-five parts by weight of styrene were added per 100 parts of polypropylene. Lupersol PMS 50% t-butylperoxy 2-ethyl hexanoate in mineral spirits, commercially available from Elf Atochem, was used as the peroxide initiator. The monomer was fed at 0.9 pph/min, and a monomer to initiator molar ratio of 105 was used. After completion of monomer and peroxide addition, the temperature was raised to, 140°C for 60 minutes under a nitrogen purge.

In Table 1, Irganox^{TM} B-225 phenolic antioxidant is a blend of 1 part Irganox^{TM} 1010 tetrakis[methylene(3,5-di-tert-butyl-4-hydroxyhydrocinnamate)]methane stabilizer and 1 part Irgafos^{TM} 168 tri(2,4-di-t-butylphenyl)phosphite stabilizer, and is commercially available from CIBA Specialty Chemicals Corporation. Some samples contained an additional 0.2 pph of Irganox^{TM} 1010 antioxidant.

Zetax^{TM} zinc salt of 2-mercaptobenzothiazole and ZMTI^{TM} zinc salt of 2-mercaptobenzimidazole are commercially available from R. T. Vanderbilt Company Incorporated.

The samples were premixed by tumbling by hand and were then charged to a Haake Rheocord internal mixer using a 250 g mixing head with Banbury mixing blades. The mix chamber had a temperature of 180°C and the rotor speed was 100 rpm. Mixing was continued until fluxing occurred, usually within two minutes, and then continued for two more minutes.

The charge from the mixer was divided into four portions and 4" x 4" compression molded plaques were prepared from each portion by pressing with a PHI compression molding press at 215°C. Specimens for testing were die cut using a Carver press. The results of the property evaluations for each sample are given in Table 1.

**Table 1**

| **Sample** | **Control 1** | **Control 2** | **1** | **2** | **3** |
|---|---|---|---|---|---|
| PP-g-S (prts. by wt.) | 100 | 100 | 100 | 100 | 100 |
| Irganox 1010 (pph) | - | 0.2 | 0.2 | - | 0.2 |
| Zetax(pph) | - | - | 2 | - | - |
| ZMTI (pph) | - | - | - | 2 | 2 |
| Irganox B225 (pph) | 0.2 | 0.2 | 0.2 | 0.2 | 0.2 |
| | | | | | |

| **Original Properties** | | | | | |
|---|---|---|---|---|---|
| Tensile strength at yield (MPa) | 22.9 | 23.3 3 | 22.3 | 21.7 | 21.0 |
| (psi) | (3323) | (3376) | (3232) | (3148) | (3042) |
| Elongation at yield (%) | 4 | 5 | 4 | 4 | 4 |
| Shore D hardness | 70 | 69 | 70 | 70 | 70 |
| | | | | | |

| **Aged at 160°C** **(3 days)** | | | | | |
|---|---|---|---|---|---|
| Tensile strength at yield (MPa) | 23.8 | 23.8 | 23.4 | 23.4 | 22.8 |
| (psi) | (3454) | (3458) | (3398) | (3392) | (3310) |
| Elongation at yield (%) | 3 | 3 | 3 | 3 | 3 |
| Shore D hardness | 72 | 72 | 73 | 71 | 73 |
| | | | | | |

| **(13 days)** | | | | | |
|---|---|---|---|---|---|
| Tensile strength at yield (MPa) | FAIL | 24.4 | 24.2 | 23.8 | 22.0 |
| (psi) | | (3533) | (3507) | (3448) | (3184) |
| Elongation at yield (%) | | 3 | 2 | 3 | 2 |
| Shore D hardness | | 71 | 72 | 71 | 72 |
| Weight loss (%) | 30 | 3 | 0 | 0 | 0 |
| | | | | | |

| **(21 days)** | | | | | |
|---|---|---|---|---|---|
| Tensile strength at yield (MPa) | FAIL | FAIL | 24.4 | 22.4 | 23.99 |
| (psi) | | | (3539) | (3242) | (3470) |
| Elongation at yield (%) | | | 2 | 2 | 2 |
| Shore D hardness | | | 72 | 72 | 73 |
| Weight loss (%) | 37 | - | 0 | 3 | 5 |

The data show that polypropylene-g-styrene compositions containing a combination of a phenolic antioxidant and the zinc salt of a mercapto compound exhibit improved heat aging compared to samples without the zinc salt. After 21 days the tensile strength was not measurable for either control and the weight loss was 37% for Control 1 and not measurable for Control 2.

### Example 2

This example demonstrates the effect on heat aging when a combination of a hindered phenol compound and a zinc salt of a mercapto compound is incorporated into a glass-reinforced composition containing a graft copolymer comprising a propylene homopolymer backbone, onto which styrene was graft polymerized.

The propylene homopolymer used as the backbone polymer was the same as in Example 1.

The graft copolymer was prepared as described in Example 1, except that 85 parts of styrene were added per hundred parts of polypropylene and the monomer feed rate was 1 pph/min.

The stabilizer package used was 0.07 wt. % calcium stearate, 0.175 wt. % Irganox^{TM} 1010 phenolic antioxidant or Irganox^{TM} B-225 phenolic antioxidant, and 1.39 wt. % of either Zetax^{TM} zinc salt of 2-mercaptobenzothiazole or ZMTI^{TM} zinc salt of 2-mercaptobenzimidazole, all percentages being by weight, based on the total weight of the composition.

PPG 3232 Glass fibers, 10-14 µm in diameter with a chopped strand size of 0.125 - 0.1875" and sized with an aminosilane sizing agent, were added in an amount of 30 wt. %. The glass fibers are commercially available from PPG Industries Inc. A maleic anhydride-grafted polypropylene having a maleic anhydride content of 1.4% was added as a compatibilizer in an amount of 1.39 wt. %.

The samples were compounded on a 40 mm ZSK extruder at a barrel temperature of 230°C, a screw speed of 425 rpm and a throughput rate of 95.13 kg/hr (210 lb/hr). One inch x 1/8" test bars were used for all of the physical property measurements. Test bars were produced on a 141.75 g (5 oz) Battenfeld injection molding machine at a barrel temperature of 246.1°C (475°F) and a mold temperature of 51.7°C (125°F). The results of the property evaluations are given in Table 2.

**Table 2**

| **Sample** | **Control 1** | **Control 2** | **1** | **2** | **3** |
|---|---|---|---|---|---|
| PP-g-S (%) | 68.36 | 68.37 | 66.975 | 66.975 | 66.975 |
| Compatibilizer (%) | 1.4 | 1.39 | 1.39 | 1.39 | 1.39 |
| Glass fibers (%) | 30 | 30 | 30 | 30 | 30 |
| Irganox B225 (%) | 0.175 | - | - | - | 0.175 |
| Irganox 1010 (%) | - | 0.175 | 0.175 | 0.175 | - |
| Zetax (%) | - | - | 1.39 | - | - |
| ZMTI (%) | - | - | - | 1.39 | 1.39 |
| Calcium stearate (%) | 0.07 | 0.07 | 0.07 | 0.07 | 0.07 |

| **Physical Properties** | | | | | |
|---|---|---|---|---|---|
| **0 Hour Control** | | | | | |
| Tensile strength at yield (MPa) | 98.3 | 93.5 | 91.4 | 104.9 | 98.2 |
| (psi) | (14260) | (13560) | (13260) | (15210) | (14240) |
| Elongation at break (%) | 9.22 | 6.3 | 8.683 | 8.837 | 8.243 |
| Weight (g) | 0.86 | | 0.87 | 0.87 | 0.87 |

| **5 Day Aging 160°C** | | | | | |
|---|---|---|---|---|---|
| Tensile strength at yield (MPa) | 20.5 | 76.2 | 82.8 | 75.1 | 80.4 |
| (psi) | (2968) | (11050) | (12010) | (10890) | (11660) |
| Retained strength (%) | 20.81 | 81.48 | 90.57 | 71.59 | 81.88 |
| Elongation at break (%) | 1.7 | 2.94 | 6.483 | 6.108 | 6.918 |
| Retained elongation (%) | - | 46.7 | 74.66 | 69.11 | 83.92 |
| Weight loss (%) | 2.5 | 0 | 0 | 0 | 0 |

| **10 Day Aging 160°C** | FAIL | | | | |
|---|---|---|---|---|---|
| Tensile strength at yield (MPa) | | 29.3 | 54.5 | 75.2 | 59.9 |
| (psi) | | (4250) | (7902) | (10900) | (8691) |
| Retained strength (%) | | 31.3 | 59.59 | 71.66 | 61.03 |
| Elongation at break (%) | | 1.06 | 4.439 | 6.491 | 4.814 |
| Retained elongation (%) | | 16.8 | 51.12 | 73.45 | 58.4 |
| Weight loss (%) | | - | 0 | 0 | 0 |

| **20 Day Aging 160°C** | | FAIL | | | |
|---|---|---|---|---|---|
| Tensile strength at yield (MPa) | | | 43.8 | 65.0 | 45.9 |
| (psi) | | | (6356) | (9429) | (6655) |
| Retained strength (%) | | | 47.9 | 61.9 | 46.73 |
| Elongation at break (%) | | | 1.208 | 1.789 | 1.275 |
| Retained elongation (%) | | | 13.91 | 20.24 | 15.46 |
| Weight loss (%) | | | 0.68 | 1.03 | 1.49 |

| **30 Day Aging 160°C** | | | | | |
|---|---|---|---|---|---|
| Tensile strength at yield (MPa) | | | 32.5 | 50.0 | 24.8 |
| (psi) | | | (4712) | (7252) | (3596) |
| Retained strength (%) | | | 35.53 | 47.68 | *25.25* |
| Elongation at break (%) | | | - | 1.018 | 0.8975 |
| Retained elongation (%) | | | - | 11.51 | 10.88 |
| Weight loss (%) | | | 1.68 | 1.65 | 2.44 |

The data show that glass-reinforced polypropylene-g-styrene compositions containing a combination of a hindered phenol compound and a zinc salt of a mercapto compound exhibit improved heat aging properties compared to compositions without the zinc salt.

### Example 3

This example demonstrates the effect on heat aging of incorporating a combination of a hindered phenol compound and a zinc salt of a mercapto compound into impact-modified, glass-reinforced formulations containing a graft copolymer comprising a backbone of propylene homopolymer, onto which styrene was graft polymerized.

The propylene homopolymer used as the backbone polymer was the same as in Example 1.

The graft copolymer was prepared as described in Example 1.

The graft copolymer was then blended with a broad molecular weight distribution polypropylene (BMWD PP1) having a polydispersity index (PI) of 7-12 and a melt flow rate (MFR) of 12.0 g/10 min, which is commercially available from Montell USA Inc. The amount of BMWD PP added to each sample is given in Table 3.

The stabilizer package used was 0.07 wt. % calcium stearate, 0.175% Irganox^{TM} 1010 antioxidant, and 1.4% of either Zetax^{TM} zinc 2-mercaptobenzothiazole or ZMTI^{TM} zinc 2 -mercaptobenzimidazole, all percentages being by weight, based on the total weight of the composition.

In Table 3, the glass fiber and the compatibilizer were the same as in Example 2. Kraton^{TM} RP6912 styrenelethylene-propylene/styrene triblock copolymer containing 29% styrene and 71% ethylene-propylene and Kraton^{TM} FG1901X styrene/ethylene-butene-1/styrene triblock copolymer containing 1% grafted maleic anhydride are commercially available from Shell Chemical Company. EPM 306P random ethylene/propylene copolymer having an ethylene content of 57% is commercially available from Polysar Rubber Division of Miles, Incorporated.

The samples were compounded and extruded on a 40 mm ZSK extruder at a barrel temperature of 240°C, a screw speed of 450 rpm, and a throughput rate of 90.6 kg/hr (200 lb/hr). The compounded samples were molded into test bars as described in Example 2. The results of the property evaluations are given in Table 3.

**Table 3**

| **Sample** | **Control** | **1** | **2** |
|---|---|---|---|
| BMWD PP 1 (%) | 22.04 | 21.337 | 21.337 |
| PP-g-S (%) | 22.04 | 21.338 | 21.338 |
| Compatibilizer (%) | 1.3 | 1.3 | 1.3 |
| Glass fibers (%) | 35 | 35 | 35 |
| Kraton RP6912 (%) | 6.46 | 6.46 | 6.46 |
| Kraton FG1901X (%) | 6.46 | 6.46 | 6.46 |
| Polysar EPM 306P (%) | 6.46 | 6.46 | 6.46 |
| Irganox 1010 (%) | 0.175 | 0.175 | 0.175 |
| Zetax (%) | - | 1.4 | |
| ZMTI(%) | - | - | 1.4 |
| Calcium stearate (%) | 0.07 | 0.07 | 0.07 |

| **Physical Properties** | | | |
|---|---|---|---|
| **0 Hour Control** | | | |
| Tensile strength at yield (MPa) | 80.9 | 67.9 | 72.5 |
| (psi) | (11730) | (9850) | (10510) |
| Elongation @ break (%) | 6.09 | 12.85 | 13.57 |
| Weight (g) | | 0.85 | 0.85 |

| **5 Day Aging 160°C** | | | |
|---|---|---|---|
| Tensile strength at yield MPa) | 30.3 | 67.1 | 72.2 |
| (psi) | (4400) | (9728) | (10480) |
| Retained strength (%) | 37.5 | 98.76 | 99.7 |
| Elongation @ break (%) | 1..3 | 9.463 | 13.7 |
| Retained elongation (%) | 21.3 | 73.64 | 100.9 |
| Weight loss (%) | - | 0 | 0 |

| **10 Day Aging 160°C** | | | |
|---|---|---|---|
| Tensile strength at yield (MPa) | 33.1 | 53.7 | 78.7 |
| (psi) | (4799) | (7784) | (11420) |
| Retained strength (%) | 40.9 | 79.02 | 108.9 |
| Elongation at break (%) | 1.15 | 8.582 | 13.33 |
| Retained elongation (%) | 18.9 | 66.78 | 98.2 |
| Weight loss (%) | - | 0 | 0 |

| **20 Day Aging 160°C** | FAIL | | |
|---|---|---|---|
| Tensile strength at yield (MPa) | | 43.6 | 58.8 |
| (psi) | | (6324) | (8529) |
| Retained strength (%) | | 64.2 | 81.15 |
| Elongation at break (%) | | 1.244 | 5.226 |
| Retained elongation (%) | | 9.68 | 38.51 |
| Weight loss (%) | | 27.65 | 1.2 |

| **30 Day Aging 160°C** | | FAIL | |
|---|---|---|---|
| Tensile strength at yield MPa) | | | 41.8 |
| (psi) | | | (6063) |
| Retained strength (%) | | | 57.69 |
| Elongation at break (%) | | | 1.457 |
| Retained elongation (%) | | | 10.74 |
| Weight loss (%) | | | 9.53 |

The data show that impact-modified, glass-reinforced polypropylene-g-styrene compositions containing a combination of a hindered phenol compound and a zinc salt of a mercapto compound exhibit improved heat aging properties compared to compositions without the zinc salt.

### Example 4

This example demonstrates the effect on heat aging when a combination of a phenolic antioxidant and a zinc salt of a mercapto compound are incorporated into an impact-modified formulation containing 30% of a calcium carbonate filler and a graft copolymer comprising a propylene homopolymer backbone, onto which styrene was graft polymerized.

The propylene homopolymer used as the backbone polymer had an average MFR of 9 g/10 min and a poured bulk density of 0.340-0345 g/cm³, and is commercially available from Montell USA Inc.

The graft copolymer was prepared as described in Example 1 except that 85 parts of styrene per hundred parts of polypropylene were added and the monomer feed rate was 1 pph/min.

The graft copolymer was then blended with either BMWD PP 1, described in Example 3; BMWD PP 2, which had a MFR of 1.0 g/10 min. and a PI of 5.0 - 8.0, or BMWD PP 3, comprising 86% of a BMWD propylene homopolymer matrix and 14% of an ethylene/propylene copolymer with an ethylene content of 50%, all commercially available from Montell USA Inc. 30% Supercoat CaCO₃, commercially available from ECC International, was added to all samples.

In Table 4, Kraton^{TM} G1652 was a styrene/ethylene-butene-1/styrene triblock copolymer rubber containing 29% styrene and 71% ethylene/butene-1 rubber midblock, commercially available from Shell Chemical Company. EPM 306P rubber was described in Example 3.

The stabilizer package used was 0.07% calcium stearate, 1.39% of either Zetax^{TM} zinc 2-mercaptobenzothiazole or ZMTI^{TM} zinc mercaptobenzimidazole, and 0.175% lrganox^{TM} 1010 phenolic antioxidant, all percentages being by weight, based on the total weight of the composition.

The samples were compounded and extruded on a 34 mm Leistritz extruder at a barrel temperature of 200°C, a screw speed of 375 rpm and a throughput rate of 18.1 kg/hr (40 lb/hr). The compounded samples were molded into test bars as described in Example 2. The results of the property evaluations are given in Table 4.

**Table 4**

| **Sample** | **Control 1** | **Control 2** | **1** | **2** | **3** | **4** |
|---|---|---|---|---|---|---|
| BMWD PP 1 (%) | 52.0 | - | 50.845 | 50.845 | - | - |
| PP-g-S(%) | 7.26 | 27.66 | 7.02 | 7.02 | 26.265 | 26.265 |
| BMWD PP 2 (%) | - | 12.0 | - | - | 12 | 12 |
| BMWD PP 3 (%) | | 19.1 | - | - | 19.1 | 19.1 |
| CaC0₃(%) | 30 | 30 | 30 | 30 | 30 | 30 |
| Kraton G1652 (%) | 5.25 | 5.5 | 5.25 | 525 | 5.5 | 5.5 |
| Polysar EPM 306P (%) | 5.25 | 5.5 | 5.25 | 5.25 | 5.5 | 5.5 |
| Irganox 1010(%) | 0.175 | 0.175 | 0.175 | 0.175 | 0.175 | 0.175 |
| Zetax (%) | - | - | 1.39 | - | 1.39 | - |
| ZMTI (%) | - | - | - | 1.39 | - | 1.39 |
| Calcium stearate (%) | 0.07 | 0.07 | 0.07 | 0.07 | 0.07 | 0.07 |

| **Physical Properties** | | | | | | |
|---|---|---|---|---|---|---|
| **0 hour Control** | | | | | | |
| Tensile strength (MPa) | 27.5 | 25.3 | 23.0 | 262 | 23.9 | 24.8 |
| (psi) | (3986) | (3675) | (3330) | (3798) | (3469) | (3604) |
| Elongation at Break (%) | 322 | 19.1 | 166 | 410.9 | 278.6 | 274.3 |
| Weight (g) | 2.394 | 2396 | 0.8 | 0.82 | 0.82 | 0.8 |

| **5 Day Aging 160°C** | | | | | | |
|---|---|---|---|---|---|---|
| Tensile strength (MPa) | 26.0 | 24.4 | 24.8 | 27.7 | 23.6 | 25.5 |
| (psi) | (3778) | (3534) | (3591) | (4024) | (3428) | (3705) |
| Retained strength (%) | 94.8 | 96.2 | 107.8 | 105.9 | 98.8 | 102.8 |
| Elongation at break (%) | 223 | 15.2 | 2338 | 145 | 14.97 | 113.5 |
| Retained elongation (%) | 693 | 79.6 | 14.08 | 35.28 | 537 | 41.37 |
| Weight loss (%) | 0.8 | 0.9 | 0 | 0 | -1.22 | -1.25 |

| **10 Day Aging 160°C** | | | | | | |
|---|---|---|---|---|---|---|
| Tensile strength (MPa) | 26.7 | 252 | 253 | 25.9 | 25.0 | 25.2 |
| (psi) | (3876) | (3660) | (3670) | (3750) | (3622) | (3654) |
| Retained strength (%) | 972 | 99.6 | 110.2 | 1013 | 104.4 | 101.4 |
| Elongation at break (%) | 16.2 | 10.3 | 28.13 | 78.1 | 13.17 | 94.9 |
| Retained elongation (%) | 50.3 | 53.9 | 16.9 | 19 | 4.7 | 34.6 |
| Weight loss (%) | 10.5 | 16.9 | 0 | -2.4 | -1.2 | -1.25 |

| **20 Day Aging 160°C** | | | | | | |
|---|---|---|---|---|---|---|
| Tensile strength (MPa) | 27.0 | 22.6 | 22.1 | 26.1 | 23.5 | 24.6 |
| (psi) | (3921) | (3274) | (3201) | (3786) | (3402) | (3570) |
| Retained strength (%) | 98.4 | 89.1 | 96.1 | 99.7 | 98.1 | 99.1 |
| Elongation at break (%) | 9.9 | 1.87 | 2.557 | 82.4 | 4.779 | 44.9 |
| Retained elongation (%) | 30.8 | 9.8 | 1.5 | 20.1 | 1.7 | 16.4 |
| Weight loss (%) | 29.5 | 32.3 | 0 | -2.4 | -1.2 | -1.25 |

| **30 Day Aging 160°C** | FAIL | FAIL | | | | |
|---|---|---|---|---|---|---|
| Tensile strength (MPa) | | | 7.4 | 273 | 10.0 | 13.7 |
| (psi) | | | (1076) | (3962) | (1454) | (1981) |
| Retained strength (%) | | | 32.31 | 104.3 | 41.9 | 54.97 |
| Elongation at break (%) | | | 0.5861 | 4.413 | 0.8279 | 0.9449 |
| Retained elongation (%) | | | 0.35 | 1.07 | 0.33 | 0.34 |
| Weight loss (%) | | | 0.375 | 1.1 | 1.34 | 0.25 |

The data show that impact-modified polypropylene-g-styrene compositions containing an inorganic filler and a combination of a hindered phenol compound and a zinc salt of a mercapto compound exhibit improved heat aging properties compared to compositions without the zinc salt.

### Example 5

This example demonstrates the effect on heat aging when a combination of a hindered phenol compound and a zinc salt of a mercapto compound are incorporated into an impact-modified formulation containing 35% of a talc filler and a graft copolymer comprising a propylene homopolymer backbone, onto which styrene was graft polymerized.

The propylene homopolymer used as the backbone polymer was the same as in Example 4.

The graft copolymer was prepared as described in Example 1 except that 85 parts of styrene were added per hundred parts of polypropylene and the monomer feed rate was 1 pph/min.

The graft copolymer was then blended with BMWD PP 2, which was described in Example 4. 35% Jetfil 625C talc having a particle size distribution of >2 µm, commercially available from Luzenac America, was added to both samples. A heterophasic polyolefin comprising 40% propylene homopolymer matrix and 60% ethylene/propylene copolymer having an ethylene content of 60% (Heterophasic polyolefin 1) was also added.

Epon 1002F bisphenol A/epichlorohydrin resin, commercially available from Shell Oil Company, was added to prevent the stabilizers from being complexed in the mineral portion of the formulation, rendering them unable to stabilize the polymer components. The stabilizer package used was 0.065% calcium stearate, 0.1625% Irganox™ B-225 phenolic antioxidant, and 1.4% ZMTT^{TM} zinc salt of 2- mercaptobenzimidazole, all percentages being by weight, based on the total weight of the composition.

The samples were compounded and extruded as described in Example 4. The compounded samples were molded into test bars as described in Example 2. The results of the property evaluations are given in Table 5.

**Table 5**

| **Sample** | **Control** | **1** |
|---|---|---|
| Talc (%) | 34.3725 | 34.3625 |
| BMWD PP 2 (%) | 14.18 | 13.78 |
| PP-g-S (%) | 20.77 | 20.27 |
| Het. Polyolefin 1 (%) | 29.95 | 29.46 |
| Irganox B225 (%) | 0.1625 | 0.1625 |
| Calcium stearate (%) | 0.065 | 0.065 |
| Epon 1002F (%) | 0.5 | 0.5 |
| ZMTI(%)) | - | 1.4 |

| **Physical Properties** | | |
|---|---|---|
| **0 Hour Control** | | |
| Tensile strength (MPa) | 29.1 | 28.5 |
| (psi) | (4214) | (4133) |
| Elongation at break (%) | 8.78 | 15.71 |
| Weight (g) | 2.43 | 2.45 |

| **5 Day Aging 160°C** | | |
|---|---|---|
| Tensile strength (MPa) | 27.7 | 28.5 |
| (psi) | (4015) | (4139) |
| Retained strength (%) | 95.3 | 100.15 |
| Elongation at break (%) | 6.4 | 1027 |
| Retained elongation (%) | 72.9 | 65.37 |
| Weight loss (%) | 0.1 | 0.408 |

| **10 Day Aging 160°C** | | |
|---|---|---|
| Tensile strength (MPa) | 27.9 | 28.6 |
| (psi) | (4044) | (4151) |
| Retained strength (%) | 96.0 | 100.44 |
| Elongation at break (%) | 4.13 | 10 |
| Retained elongation (%) | 47.0 | 63.65 |
| Weight loss (%) | 6.7 | 0.408 |

| **20 Day Aging 160°C** | | |
|---|---|---|
| Tensile strength (MPa) | 21.9 | 26.5 |
| (psi) | (3182) | (3841) |
| Retained strength (%) | 75.5 | 92.93 |
| Elongation at break (%) | 1.33 | 4.214 |
| Retained elongation (%) | 15.1 | 26.82 |
| Weight loss (%) | 17.4 | 0.408 |

| **30 Day Aging 160°C** | FAIL | |
|---|---|---|
| Tensile strength (MPa) | | 16.1 |
| (psi) | | (2341) |
| Retained strength (%) | | 56.64 |
| Elongation at break (%) | | 1.15 |
| Retained elongation (%) | | 7.32 |
| Weight loss (%) | | 6.12 |

The data show that a talc-filled, impact-modified polypropylene-g-styrene composition containing a combination of a hindered phenol compound and the zinc salt of 2-mercaptobenzimidazole exhibits improved heat aging properties compared to the composition without the zinc salt

### Example 6

This example demonstrates the effect on heat aging when a combination of a hindered phenol compound and a zinc salt of a mercapto compound are incorporated into an impact-modified formulation containing a graft copolymer comprising a propylene homopolymer backbone, onto which methyl methacrylate-co-methyl acrylate was graft polymerized (PP-g-MMA).

The propylene homopolymer used as the backbone polymer was the same as in Example 4.

The monomers were grafted onto the polypropylene backbone at a grafting temperature of 115°C using the previously described peroxide-initiated graft polymerization process. Methyl methacrylate (91.4 parts per hundred parts of polypropylene) and 3.6 pph methyl acrylate were added. Lupersol^{TM} PMS 50% t-butylperoxy-2-ethyl hexanoate in mineral spirits, commercially available from Elf Atochem, was used as the peroxide initiator. The monomer was fed at 0.9 pph/min. The reaction conditions were maintained at 115°C for 30 minutes after completion of monomer and peroxide addition. The temperature was then raised to 140°C for two hours under a nitrogen purge.

The graft copolymer was blended with BMWD PP 2, which was described in Example 4. The impact modifier used in Table 6 was Engage^{TM} 8150 ethylene/octene-1 copolymer having a comonomer content of 25% and is commercially available from DuPont-Dow Elastomers.

The stabilizer package used was 0.1% calcium stearate, 0.25% lrganox^{TM} B-215 antioxidant, and 1.96% of either Zetax^{TM} zinc 2-mercaptobenzothiazole or ZMTT^{TM} zinc 2-mecaptobenzimiazole, all percentages being by weight, based on the total weight of the composition. Irganox^{TM} B-215 phenolic antioxidant is a mixture of 1 part Irganox^{TM} 1010 antioxidant and 2 parts lrgafos^{TM} 168 stabilizer and is commercially available from CIBA Specialty Chemicals Corporation.

The samples were compounded and extruded on a 34 mm Leistritz extruder at a barrel temperature of 230°C, a screw speed of 350 rpm, and a throughput rate of 22.7kg/hr (50 Ib/hr). The compounded samples were molded into test bars as described in Example 2. The results of the property evaluations are given in Table 6.

**Table 6**

| **Sample** | **Control.** | **1** | **2** |
|---|---|---|---|
| PP-g-MMA PP (%) | 40.1 | 40.1 | 40.1 |
| BMWD PP 2 (%) | 44.55 | 42.59 | 42.59 |
| Engage 8150 (%) | 15 | 15 | 15 |
| Irganox B215 (%) | 0.25 | 025 | 0.25 |
| Calcium stearate (%) | 0.1 | 0.1 | 0.1 |
| Zetax (%) | - | 1.96 | |
| ZMTI (%) | - | - | 1.96 |

| **0 Hour Control** | | | |
|---|---|---|---|
| Tensile strength at yield (MPa) | 332 | 32.7 | 32.4 |
| (psi) | (4820) | (4740) | (4693) |
| Elongation at yield (%) | 4.19 | 3.4 | 4.19 |
| Weight per 'S' bar (g) | 1.921 | 1.95 | 1.94 |

| **5 Day Aging, 160°C** | | | |
|---|---|---|---|
| Tensile strength at yield (MPa) | 33.4 | 31.6 | 30.8 |
| (psi) | (4849) | (4582) | (4463) |
| Elongation at yield (%) | 22.8 | 3.1 | 2.84 |
| Weight per 'S' bar (g) | 1.9 | 1.936 | 1.913 |
| Weight loss (%) | 1.1 | 0.7 | 1-4 |

| **10 Day Aging, 160°C** | | | |
|---|---|---|---|
| Tensile strength at yield (MPa) | 0.5 | 29.9 | 30.5 |
| (psi) | (77.57) | (4326) | (4424) |
| Elongation at yield (%) | 0.307 | 2.76 | 2.92 |
| Weight per 'S' bar (g) | 1.65 | 1.925 | 1.915 |
| Weight loss (%) | 14.1 | 1.3 | 1.3 |

| **17 Day Aging, 160°C** | FAIL | | |
|---|---|---|---|
| Tensile strength at yield (MPa) | | 2.12 | 20.7 |
| (psi) | | (3073) | (3009) |
| Elongation at yield (%) | | 1.55 | 2.08 |
| Weight per 'S' bar (g) | | 1.9 | 1.89 |
| Weight loss (%) | | 2.6 | 2.6 |

| **24 Day Aging, 160°C** | | FAIL | |
|---|---|---|---|
| Tensile strength at yield (MPa) | | | 1.7 |
| (psi) | | | (240.5) |
| Elongation at yield (%) | | | 0.696 |
| Weight per 'S' bar (g) | | | 1.766 |
| Weight loss (%) | | | 9 |

| **30 Day Aging, 160°C** | | | FAIL |
|---|---|---|---|
| Tensile strength at yield (MPa) | | | |
| (psi) | | | |
| Elongation at yield (%) | | | |
| Weight per 'S' bar (g) | | | |
| Weight loss (%) | | | |

The data show that impact-modified polypropylene-g-methyl methacrylate compositions containing a combination of hindered phenol compound and a zinc salt of a mercapto compound exhibit improved heat aging properties compared to compositions without the zinc salt.

### Example 7

This example demonstrates the effect on heat aging when a combination of a hindered phenol compound and a zinc salt of a mercapto compound are incorporated into an impact-modified composition containing a graft copolymer comprising a propylene homopolymer backbone, onto which styrene, α-methylstyrene, and maleic anhydride were graft polymerized (PP-g-S/MA).

The propylene homopolymer used as the polymer backbone was the same as in Example 4.

The monomers were grafted onto the polypropylene backbone at a grafting temperature of 90°C using the previously described peroxide-initiated graft polymerization process, α-methylstyrene (44% of the total weight of monomers), styrene (19.6%), and maleic anhydride (36.4%) were added at a total monomer add level of 95 parts of monomer per hundred parts of polypropylene. Lupersol^{TM} PMS 50% t-butylperoxy-2-ethyl hexanoate in mineral spirits, commercially available from Elf Atochem, was used as the peroxide initiator. The monomer was fed at 0.75 pph/min. A monomer to initiator molar ratio of 100 was used. The reaction conditions were maintained at 90°C for 30 minutes after completion of monomer and peroxide addition. The temperature was then raised to 140°C for 3 hours under a nitrogen purge.

The graft copolymer was blended with BMWD PP 2, which was described in Example 4, and Engage^{TM} 8150 ethylene/octene-1 copolymer rubber as an impact modifier.

The stabilizer package used was 0.25% lrganox^{TM} B-215 phenolic antioxidant, 0.1% calcium stearate, and 1.96% of either Zetax^{TM} zinc 2-mercaptobenzothiazole or ZMTI^{TM} zinc 2-mercaptobenzimidazole, all percentages being by weight, based on the total weight of the composition.

The samples were compounded and extruded as described in Example 6, except that the barrel temperature was 240°C. The compounded samples were dried at 80°C for at least 4 hours prior to molding to remove surface moisture. The samples were molded into test bars as described in Example 2. The results of the property evaluations are given in Table 7.

**Table 7**

| **Sample** | **Control** | **1** | **2** |
|---|---|---|---|
| PP-g-S/MA (%) | 40.1 | 40.1 | 40.1 |
| BMWP PP 2 (%) | 44.55 | 42.59 | 42.59 |
| Engage 8150 (%) | 15 | 15 | 15 |
| Irganox B215 (%) | 0.25 | 0.25 | 0.25 |
| Calcium stearate (%) | 0.1 | 0.1 | 0.1 |
| Zetax (%) | - | 1.96 | - |
| ZMTI (%) | - | - | 1.96 |

| **0 Hour Control** | | | |
|---|---|---|---|
| Tensile strength at yield (MPa) | 31.4 | 30.7 | 32.0 |
| (psi) | (4561) | (4450) | (4646) |
| Elongation at yield (%) | 3.97 | 3.75 | 3.88 |
| Weight Per 'S' bar (g) | 1.932 | 1.939 | 1.937 |

| 3 Day Aging, 160°C | | | |
|---|---|---|---|
| Tensile strength at yield (MPa) | 30.3 | 29.8 | 29.6 |
| (psi) | (4399) | (4315) | (4292) |
| Elongation at yield (%) | 16 | 3.49 | 5.98 |
| Weight per `S' bar (g) | 1.939 | 1.914 | 1.943 |
| Weight loss (%) | +0.4 | 1.3 | +03 |

| **10 Day Aging, 160°C** | | | |
|---|---|---|---|
| Tensile strength at yield (MPa) | 13.1 | 29.2 | 29.6 |
| (psi) | (1896) | (4239) | (4295) |
| Elongation at yield (%) | 1-2 | 3.96 | 5.96 |
| Weight per 'S' bar (g) | 1.89 | 1.93 | 1.92 |
| Weight loss (%) | 2.2 | 0.5 | 0.8 |

| **17 Day Aging, 160°C** | FAIL | | |
|---|---|---|---|
| Tensile strength at yield (MPa) | | 10.8 | 26.1 |
| (psi) | | (1568) | (3789) |
| Elongation at yield (%) | | 0.895 | 2.16 |
| Weight per 'S' bar (g) | | 1.92 | 1.91 |
| Weight loss (%) | | 1 | 1.4 |

| **24 Day Aging, 160°C** | | FAIL | |
|---|---|---|---|
| Tensile strength at yield (MPa) | | | 24.8 |
| (psi) | | | (3604) |
| Elongation at yield (%) | | | 1.55 |
| Weight per 'S' bar (g) | | | 1.915 |
| Weight loss (%) | | | 12 |

| **30 Day Aging, 160°C** | | | FAIL |
|---|---|---|---|
| Tensile strength at yield (MPa) | | | |
| (psi) | | | |
| Elongation at yield (%) | | | |
| Weight per 'S' bar (g) | | | |
| Weight loss (%) | | | |

The data show that impact-modified polypropylene-g-α-methylstyrene/styrene/maleic anhydride compositions containing a combination of a hindered phenol compound and a zinc salt of a mercapto compound exhibit improved heat aging properties compared to compositions without the zinc salt.

### Example 8

This example demonstrates the effect on heat aging when a combination of a hindered phenol compound and a zinc salt of a mercapto compound are incorporated into an impact-modified composition containing a graft copolymer comprising a propylene homopolymer backbone, onto which styrene was graft polymerized (PP-g-S). The compositions contain either talc or CaCO₃ as a filler.

The propylene homopolymer used as the polymer backbone was the same as in Example 4.

The graft copolymer was prepared as described in Example 1 except that 85 parts of styrene per hundred parts of polypropylene were added and the monomer feed rate was 1 pph/min.

The graft copolymer was blended with BMWD PP 2, which was described in Example 4, and heterophasic polyolefin 1, which was described in Example 5.

The CaCO₃ was described in Example 4. The talc was described in Example 5. Epon 1002F bisphenol A/epichlorohydrin resin was added along with a stabilizer package that included 0.13% Irganox^{TM} B215 phenolic anitoxidant, and 1.3% ZMTI^{TM} zinc salt of 2-mercaptobenzimidazole, all percentages being by weight, based on the total weight of the composition.

The samples were compounded and extruded as described in Example 6. The compounded samples were molded into test bars as described in Example 2. The results, of the property evaluations are given in Table 8.

**Table 8**

| **Sample** | **Control 1** | **Control 2** | **1** | **2** |
|---|---|---|---|---|
| CaCO₃ (%) | 35 | - | 35 | - |
| Talc (%) | - | 34.75 | - | 34.75 |
| PP-g-S (%) | 20.9 | 20.9 | 20.9 | 20.9 |
| BMWD PP 2 (%) | 23.47 | 23.47 | 22.17 | 22.17 |
| Het Polyolefin 1 (%) | 20.5 | 20.5 | 20.5 | 20.5 |
| Epon 1002F (%) | - | 0.25 | - | 0.25 |
| lrganox B215(%) | 0.13 | 0.13 | 0.13 | 0.13 |
| ZMTI (%) | - | - | 1.3 | 1.3 |

| **0 Hour Control** | | | | |
|---|---|---|---|---|
| Tensile strength at yield (MPa) | 23.1 | 34.5 | 23.2 | 34.1 |
| (psi) | (3345) | (4998) | (3359) | (4948) |
| Elongation at yield (%) | 2.01 | 1.99 | 1.8 | 224 |
| Weight per 'S' bar (g) | 2.396 | 2.395 | 2.432 | 2.429 |

| **3 Day Aging, 160°C** | | | | |
|---|---|---|---|---|
| Tensile Strength at yield (MPa) | 23.6 | 24.5 | 23.6 | 33.6 |
| (psi) | (3430) | (3552) | (3420) | (4878) |
| Elongation at yield (%) | 1.88 | 1.27 | 1.88 | 1.85 |
| Weight per 'S' bar (g) | 2.375 | 2.364 | 2.432 | 2.428 |
| Weight loss (%) | 0.9 | 1.7 | 0 | 0.05 |

| **10 Day Aging, 160°C** | | | | |
|---|---|---|---|---|
| Tensile strength, at yield (MPa) | 4.6 | 27.0 | 22.7 | 29.8 |
| (psi) | (661.1) | (3915) | (3290) | (4321) |
| Elongation at yield (%) | 0.62 | 0.938 | 1.65 | 1.59 |
| Weight per 'S' bar (g) | 2.14 | 224 | 2.42 | 2.43 |
| Weight loss (%) | 10.7 | 6.5 | 0.5 | 0 |

| **17 Day Aging, 160°C** | FAIL | FAIL | FAIL | FAIL |
|---|---|---|---|---|
| Tensile strength at yield (MPa) | | | | |
| (psi) | | | | |
| Elongation at yield (%) | | | | |
| Weight per 'S' bar (g) | | | | |
| Weight loss (%) | | | | |

The data show that impact-modified polypropylene-g-styrene compositions containing a mineral filler and a combination of a hindered phenol compound and a zinc salt of a mercapto compound exhibit improved heat aging properties compared to compositions without the zinc salt.

## Claims

1. A composition comprising:
(1) a graft copolymer comprising a backbone of a propylene polymer having graft polymerized thereto polymerized monomers selected from the group consisting of
(a) vinyl-substituted aromatic compounds,
(b) unsaturated aliphatic acids or esters thereof,
(c) anhydrides of unsaturated aliphatic dicarboxylic acids, and
(d) mixtures thereof;
(2) 0.05% to 0.5% of a sterically hindered phenol compound, based on the total weight of the composition, and
(3) 0.5% to 5.0% of zinc 2-mercaptobenzothiazole, zinc 2-mercaptotoluimidazole or zinc 2-mercaptobenzimidazole, based on the total weight of the composition.

2. The composition of claim 1 wherein the propylene polymer is a crystalline homopolymer of propylene having an isotactic index greater than 80.

3. The composition of claim 1 wherein the propylene polymer is a crystalline copolymer of propylene and an olefin selected from the group consisting of ethylene and C₄-C₁₀ α-olefins, provided that when the olefin is ethylene, the maximum polymerized ethylene content is 10% by weight, and when the olefin is a C₄-C₁₀ α-olefin, the maximum polymerized content thereof is 20% by weight, the copolymer having an isotactic index greater than 85.

4. The composition of claim 1 wherein the propylene polymer is a crystalline terpolymer of propylene and two olefins selected from the group consisting of ethylene and C₄-C₈ α-olefins, provided that the maximum polymerized C₄-C₈ α-olefin content is 20% by weight, and, when ethylene is one of the olefins, the maximum polymerized ethylene content is 5% by weight, the terpolymer having an isotactic index greater than 85.

5. The composition of claim 1 wherein the monomer is styrene.

6. The composition of claim 1 wherein the monomers are styrene, α-methylstyrene and maleic anhydride.

7. The composition of claim 1 wherein the monomers are methyl methacrylate and methyl acrylate.

8. The composition of claim 1 that additionally comprises 2% to 30%, based on the total weight of the composition, of a rubber component selected from one or more of the group consisting of (a) an olefin copolymer rubber, (2) a monoalkenyl aromatic hydrocarbon-conjugated diene block copolymer, and (c) a core-shell rubber.

9. The composition of claim 1 that additionally comprises 5% to 90%, based on the total weight of the composition, of a broad molecular weight distribution propylene polymer having a M_{w}/Mₙ of 5 to 60 and a melt flow rate of 0.5 to 50 g/10 min..

10. The composition of claim 1 that additionally comprises 20% to 35% of an inorganic filler selected from the group consisting of (a) calcium carbonate and (b) talc.

11. The composition of claim 1 that additionally comprises 20% to 50% of glass fibers.

12. A process for making a heat stable graft copolymer, the process comprising mixing a graft copolymer comprising a backbone of a propylene polymer having graft polymerized thereto polymerized monomers selected from the group consisting of:
(a) vinyl-substituted aromatic compounds,
(b) unsaturated aliphatic carboxylic acids or esters thereof,
(c) anhydrides of unsaturated aliphatic dicarboxylic acids, and
(d) mixtures thereof,
with a combination of (1) 0.05% to 0.5% of a sterically hindered phenol compound and (2) 0.5% to 5.0% of zinc 2-mercaptobenzothiazole, zinc 2-mercaptotoluimidazole or zinc 2-mercaptobenzimiazole, based on the total weight of the composition.

13. The process of claim 12 wherein the propylene polymer is a crystalline homopolymer of propylene having an isotactic index greater than 80.

14. The process of claim 12 wherein the propylene polymer is a crystalline copolymer of propylene and an olefin selected from the group consisting of ethylene and C₄-C₁₀ α-olefins, provided that when the olefin is ethylene, the maximum polymerized ethylene content is 10% by weight, and when the olefin is a C₄-C₁₀ α-olefin, the maximum polymerized content thereof is 20% by weight, the copolymer having an isotactic index greater than 85;

15. The process of claim 12 wherein the propylene polymer is (c)a crystalline terpolymer of propylene and two olefins selected from the group consisting of ethylene and C₄-C₈ α-olefins, provided that the maximum polymerized C₄-C₈ α-olefin content is 20% by weight, and, when ethylene is one of the olefins, the maximum polymerized ethylene content is 5% by weight, the terpolymer having an isotactic index greater than 85;

16. The process of claim 12 wherein the monomer is styrene.

17. The process of claim 12 wherein the monomers are styrene, α-methylstyrene and maleic anhydride.

18. The process of claim 12 wherein the monomers are methyl methacrylate and methyl acrylate.

## Patentansprüche

1. Zusammensetzung, enthaltend:
(1) ein Pfropfcopolymer mit einer Hauptkette aus einem Propylenpolymer mit darauf aufgepfropften polymerisierten Monomeren aus der Gruppe bestehend aus
(a) vinylsubstituierten aromatischen Verbindungen,
(b) ungesättigten aliphatischen Säuren oder Estern davon,
(c) Anhydriden ungesättigter aliphatischer Dicarbonsäuren und
(d) Gemischen davon;
(2) 0,05 bis 0,5% einer sterisch gehinderten Phenolverbindung, bezogen auf das Gesamtgewicht der Zusammensetzung, und
(3) 0,5 bis 5,0% Zink-2-mercaptobenzothiazol, Zink-2-mercaptotoluimidazol oder Zink-2-mercaptobenzimidazol, bezogen auf das Gesamtgewicht der Zusammensetzung.

2. Zusammensetzung nach Anspruch 1, bei der es sich bei dem Propylenpolymer um ein kristallines Propylenhomopolymer mit einem isotaktischen Index von mehr als 80 handelt.

3. Zusammensetzung nach Anspruch 1, bei der es sich bei dem Propylenpolymer um ein kristallines Copolymer von Propylen und einem Olefin aus der Gruppe bestehend aus Ethylen und C₄-C₁₀-α-Olefinen handelt, mit der Maßgabe, daß in dem Fall, daß es sich bei dem Olefin um Ethylen handelt, der maximale einpolymerisierte Ethylengehalt 10 Gew.-% beträgt, und in dem Fall, daß es sich bei dem Olefin um ein C₄-C₁₀-α-Olefin handelt, der maximale einpolymerisierte C₄-C₁₀-α-Olefin-Gehalt 20 Gew.-% beträgt, wobei das Copolymer einen isotaktischen Index von mehr als 85 aufweist.

4. Zusammensetzung nach Anspruch 1, bei der es sich bei dem Propylenpolymer um ein kristallines Terpolymer von Propylen und zwei Olefinen aus der Gruppe bestehend aus Ethylen und C₄-C₈-α-Olefinen handelt, mit der Maßgabe, daß der maximale einpolymerisierte C₄-C₈-α-Olefin-Gehalt 20 Gew.-% beträgt und in dem Fall, daß es sich bei einem der Olefine um Ethylen handelt, der maximale einpolymerisierte Ethylengehalt 5 Gew.-% beträgt, wobei das Terpolymer einen isotaktischen Index von mehr als 85 aufweist.

5. Zusammensetzung nach Anspruch 1, bei der es sich bei dem Monomer um Styrol handelt.

6. Zusammensetzung nach Anspruch 1, bei der es sich bei den Monomeren um Styrol, α-Methylstyrol und Maleinsäureanhydrid handelt.

7. Zusammensetzung nach Anspruch 1, bei der es sich bei den Monomeren um Methylmethacrylat und Methylacrylat handelt.

8. Zusammensetzung nach Anspruch 1, die außerdem 2 bis 30%, bezogen auf das Gesamtgewicht der Zusammensetzung, einer Kautschukkomponente, die unter (a) einem Olefincopolymer-Kautschuk, (2) einem Blockcopolmyer aus monoalkenylaromatischem Kohlenwasserstoff und konjugiertem Dien und/oder (c) einem Kern-Schale-Kautschuk ausgewählt ist, enthält.

9. Zusammensetzung nach Anspruch 1, die außerdem 5 bis 90%, bezogen auf das Gesamtgewicht der Zusammensetzung, eines eine breite Molekulargewichtsverteilung aufweisenden Propylenpolymers mit einem M_{w}/Mₙ-Wert von 5 bis 60 und einer Schmelzflußrate von 0,5 bis 50 g/10 min enthält.

10. Zusammensetzung nach Anspruch 1, die außerdem 20 bis 35% eines anorganischen Füllstoffs aus der Gruppe bestehend aus (a) Cacliumcarbonat und (b) Talk enthält.

11. Zusammensetzung nach Anspruch 1, die außerdem 20 bis 50% Glasfasern enthält.

12. Verfahren zur Herstellung eines wärmestabilen Pfropfcopolymers, bei dem man ein Pfropfcopolymer mit einer Hauptkette aus einem Propylenpolymer mit darauf aufgepfropften polymerisierten Monomeren aus der Gruppe bestehend aus
(a) vinylsubstituierten aromatischen Verbindungen,
(b) ungesättigten aliphatischen Carbonsäuren oder Estern davon,
(c) Anhydriden ungesättigter aliphatischer Dicarbonsäuren und
(d) Gemischen davon;
mit einer Kombination von (1) 0,05 bis 0,5% einer sterisch gehinderten Phenolverbindung und (2) 0,5 bis 5,0% Zink-2-mercaptobenzothiazol, Zink-2-mercaptotoluimidazol oder Zink-2-mercaptobenzimidazol, bezogen auf das Gesamtgewicht der Zusammensetzung, vermischt.

13. Verfahren nach Anspruch 12, bei dem es sich bei dem Propylenpolymer um ein kristallines Propylenhomopolymer mit einem isotaktischen Index von mehr als 80 handelt.

14. Verfahren nach Anspruch 12, bei dem es sich bei dem Propylenpolymer um ein kristallines Copolymer von Propylen und einem Olefin aus der Gruppe bestehend aus Ethylen und C₄-C₁₀-α-0lefinen handelt, mit der Maßgabe, daß in dem Fall, daß es sich bei dem Olefin um Ethylen handelt, der maximale einpolymerisierte Ethylengehalt 10 Gew.-% beträgt, und in dem Fall, daß es sich bei dem Olefin um ein C₄-C₁₀-α-Olefin handelt, der maximale einpolymerisierte C₄-C₁₀-α-Olefin-Gehalt 20 Gew.-% beträgt, wobei das Copolymer einen isotaktischen Index von mehr als 85 aufweist.

15. Verfahren nach Anspruch 12, bei dem es sich bei dem Propylenpolymer um (c) ein kristallines Terpolymer von Propylen und zwei Olefinen aus der Gruppe bestehend aus Ethylen und C₄-C₈-α-Olefinen handelt, mit der Maßgabe, daß der maximale einpolymerisierte C₄-C₈-α-Olefin-Gehalt 20 Gew.-% beträgt und in dem Fall, daß es sich bei einem der Olefine um Ethylen handelt, der maximale einpolymerisierte Ethylengehalt 5 Gew.-% beträgt, wobei das Terpolymer einen isotaktischen Index von mehr als 85 aufweist.

16. Verfahren nach Anspruch 12, bei dem es sich bei dem Monomer um Styrol handelt.

17. Verfahren nach Anspruch 12, bei dem es sich bei den Monomeren um Styrol, α-Methylstyrol und Maleinsäureanhydrid handelt.

18. Verfahren nach Anspruch 12, bei dem es sich bei den Monomeren um Methylmethacrylat und Methylacrylat handelt.

## Revendications

1. Une composition comprenant :
un copolymère greffé comprenant un squelette de polymère de propylène sur lequel sont polymérisé par greffage des monomères polymérisés choisis parmi le groupe consistant en :
(a) dérivés aromatiques à substitution vinylique
(b) acides aliphatiques ou leurs esters insaturés
(c) anhydrides d'acides dicarboxyliques aliphatiques insaturés, et
(d) leurs mélanges ;
(2) 0,05 % à 0,5 % d'un dérivé phénolique encombré stériquement exprimé par rapport au poids total de la composition, et
(3) 0,5 % à 5,0 % de 2-mercaptobenzothiazole de zinc, de 2- mercaptotoluimidazole de zinc ou de 2-marcaptobenzimidazole de zinc, exprimé par rapport au poids total de la composition.

2. La composition selon la revendication 1 dans laquelle le polymère de propylène est un homopolymère cristallin de propylène présentant un indice d'isotacticité supérieur à 80.

3. La composition selon la revendication 1 dans laquelle le polymère de propylène est un copolymère cristallin de propylène et d'une oléfine choisie dans le groupe consistant en éthylène et α-oléfines en C₄-C₁₀, à condition que lorsque l'oléfine est l'éthylène, la teneur maximum en éthylène polymérisée est de 10 % en poids, et si l'oléfine est une oléfine en C₄-C₁₀, la teneur polymérisée maximum de celle-ci est de 20 % en poids, le copolymère ayant un indice d'isotacticité supérieur à 85.

4. La composition selon la revendication 1 dans laquelle le polymère de propylène est un terpolymer cristallin de propylène et de 2 oléfines choisies dans le groupe consistant en éthylène et α-oléfines en C₄-C₈, à condition que la teneur maximum en α-oléfines en C₄-C₈ polymérisées soit de 20 % en poids et si l'éthylène est d'une des oléfines, la teneur maximum en éthylène polymérisé est de 5 % en poids, le terpolymer ayant un indice d'isotacticité supérieur à 85.

5. La composition selon la revendication 1 dans laquelle le monomère est le styrène.

6. La composition selon la revendication 1 dans laquelle les monomères sont les styrènes, les α-méthylstyrène et l'anhydride maléïque.

7. La composition selon la revendication 1 dans laquelle les monomères sont les méthacrylates de méthyl et les acrylates de méthyl.

8. La composition selon la revendication 1 qui comprend en outre 2 % de 30 % exprimé par rapport au poids total de la composition, d'un composant de caoutchouc choisi parmi un ou plusieurs éléments du groupe consistant en (a) un caoutchouc de copolymère d'oléfine, (2) un copolymère séquencé d'hydrocarbure monoalkényle aromatique-diène conjugué et (c) un caoutchouc coeur-enveloppe.

9. La composition selon la revendication 1 qui comprend en outre 5 % à 90 %, exprimé par rapport au poids total de la composition, d'un polymère de propylène de distribution de masse moléculaire large ayant un Mw/Mn de 5 à 60 et un indice de fluidité de 0,5 à 50g/10 minutes.

10. La composition selon la revendication 1 qui comprend en outre 20 % à 35 % d'une charge inorganique choisie dans le groupe consistant en (a) carbonate de calcium et (b) talc.

11. La composition selon la revendication 1 qui comprend en outre 20 % à 50 % de fibres de verre.

12. Un procédé de préparation d'un copolymère greffé thermiquement stable, le procédé comprenant le malaxage d'un copolymère greffé comprenant un squelette de polymère de propylène sur lequel sont polymérisé par greffage des monomères polymérisés choisis dans le groupe consistant en
(a) composés aromatiques à substitution vinyle,
(b) acides carboxyliques aliphatiques insaturés ou leurs esters,
(c) anhydrides d'acides dicarboxyliques aliphatiques insaturés et,
(d) leurs mélanges
avec une combinaison de (1) 0,05 % à 0,5 % d'un dérivé phénolique encombré stériquement et (2) 0,5% à 5,0 % de 2-mercaptobenzothiazole de zinc, de 2-mercaptotoluimidazole de zinc ou de 2-mercaptobenzimiazole de zinc, exprimé par rapport au poids total de la composition.

13. Le procédé selon la revendication 12 dans laquelle le polymère de propylène est un copolymère cristallin de propylène ayant un indice d'isotacticité supérieur à 80.

14. Le procédé selon la revendication 12 dans laquelle le polymère de propylène est un copolymère cristallin de propylène et d'une oléfine choisie dans le groupe consistant en éthylène et α-oléfine en C₄-C₁₀, avec cette condition que si l'oléfine est l'éthylène, la teneur maximum en éthylène polymérisée est de 10% en poids, et si l'oléfine est l'α-olénne en C₄-C₁₀, la teneur maximum polymérisée de celle-ci est de 20 % en poids, le copolymère présentant un indice d'isotacticité supérieur à 85.

15. Le procédé selon la revendication 12 dans lequel le polymère de propylène est (c) un terpolymer cristallin de propylène et de deux oléfines choisies dans le groupe consistant en éthylène et α-oléfine en C₄-C₈ avec cette condition que si la teneur de l'α-oléfine en C₄-C₈ polymérisée est de 20 % en poids, et si l'éthylène est une des oléfines, la teneur maximum en éthylène polymérisé est de 5% en poids, le terpolymer présentant un indice d'isotacticité supérieur à 85.

16. Le procédé selon la revendication 12 dans lequel le polymère est le styrène.

17. Le procédé selon la revendication 12 dans lequel les monomères sont les styrènes, l'α-méthylstyrène et l'anhydride maléique.

18. Le procédé selon la revendication 12 dans lequel les monomères sont le méthacrylate de méthyl et l'acrylate de méthyl.
